# EUROPÄISCHE PATENTSCHRIFT

(11) **EP 1 484 544 B1**
(45) Veröffentlichungstag und Bekanntmachung des Hinweises auf die Patenterteilung: **08.12.2010**
(21) Anmeldenummer: 03405402.3
(22) Anmeldetag: 03.06.2003
(51) Int. Cl.: F16L 37/088, F16L 5/02, E03C 1/02, E03C 1/042

(54) **Leitungsdurchführung für die Installation von einer durch eine Wand hindurchführende Sanitärleitung**
Conduit feed-through for the installation of a sanitary tube through a wall
Traversée de conduite pour l'installation d'un tube sanitaire à travers un mur

(43) Veröffentlichungstag der Anmeldung: 08.12.2004
(73) Patentinhaber: Geberit International AG, 8645 Jona (CH)
(72) Erfinder: Tanner, Werner, 8713 Uerikon (CH); Höfliger, Peter, 8832 Wollerau (CH); Rüegg, Urs, 8645 Jona (CH)
(74) Vertreter: Groner, Manfred

(56) Entgegenhaltungen:
- DE-A- 1 800 399
- DE-A- 10 039 981
- DE-C- 19 757 975
- DE-U- 20 209 791
- US-A- 4 989 278
- US-A1- 2002 038 955
- US-B1- 6 305 721

## Beschreibung

Die Erfindung betrifft eine Leitungsdurchführung nach dem Oberbegriff des Anspruchs 1.

Bei der Installation einer Leitungsdurchführung wird der Anschlussfitting in einen Durchbruch der Wand eingesetzt und gegen Verdrehen gesichert. Am ersten Ende wird eine Leitung und am anderen Ende eine Sanitärarmatur angeschlossen. Die Wand, durch welche die Sanitärleitung hindurchzuführen ist, kann beispielsweise eine Anschlussplatte sein, die an einem Montagegestell zu befestigen ist. Die Platzverhältnisse hinter der Wand bzw. der Anschlussplatte sind häufig sehr eng und schlecht zugänglich, was die Montage erschwert.

Eine Leitungsdurchführung der genannten Art ist im Stand der Technik durch die DE 296 01 547 U bekannt geworden. Bei dieser weist der Anschlussfitting zwei sich symmetrisch gegenüberliegende gewindefreie Zylindersegmentflächen auf, die eine rechteckige Abwicklung besitzen und sich axial von einem Ende des Befestigungsgewindes über einen Teil oder die gesamte Länge des Befestigungsgewindes in Richtung des anderen Endes erstrecken. An einem Eingangsbereich des Anschlussfittings ist ein Innengewinde zum Anschluss einer Sanitärleitung angeordnet. Am anderen Ende ist ein Aussengewinde zum Anschluss einer Sanitärarmatur vorgesehen. Nach dem Einsetzen des Anschlussfittings wird somit an einem Ende ein Leitungsteil in das genannte Innengewinde und am anderen Ende eine Armatur auf das Aussengewinde aufgeschraubt.

Eine weitere Leitungsdurchführung ist im Stand der Technik aus der DE 94 06 005 bekannt geworden. Bei dieser weist der Anschlussfitting eine Mehrkant-Aussenkontur auf, mit welcher der Anschlussfitting in einem korrespondierenden Durchbruch einer Befestigungsplatte gegen Verdrehen gesichert ist. Die Fixierung des Anschlussfittings erfolgt mit zwei Muttern, die auf ein Aussengewinde aufgeschraubt werden. Der Anschlussfitting weist ebenfalls an einem Ende ein Aussengewinde und am anderen Ende ein Innengewinde zur Befestigung eines Leitungsteils bzw. einer Sanitärarmatur auf.

Die DE 202 09 791 U offenbart eine Anschlussarmatur für einen Spülkasten. Zum Verbinden eines rohbauseitigvorhandenen Wandanschlussfittings mit einem im Spülkasten angeordneten Anschlussrohr ist ein Anschlussstutzen vorgesehen, der durch eine Wand des Spülkastens hindurchführt. Das im Spülkasten angeordnete Anschlussrohr wird mit einem Verbindungsfitting verschraubt, der mit einem Steckschaft mit dem Anschlussstutzen verbunden ist.

Die DE 197 59 975 C offenbart einen Wandanschlussfitting, in den zum Anschliessen einer Armatur ein Kupplungsfitting eingeschraubt ist. Die Armatur ist mit einem Armaturenschaft versehen, der mit einem Sicherungsring in den Kupplungsfitting eingesteckt wird.

Die DE 100 39 981 A offenbart eine Zapfstelle mit einem vertieft an einer Montageplatte angeordneten Kupplungselement, das an einer Vorderseite einen handelsüblichen Steck- oder Schnappverschluss aufweist. An der Zapfstelle kann beispielsweise in einem Spital oder in der Gastronomie eine mobile Fluidleitung angeschlossen werden. Hinter der Montageplatte ist eine stationär verlegte Fluidleitung vorgesehen, die mit einem Rohrbogen verbunden ist, der mit einem mit einem Aussengewinde versehenen Rohrstück verbunden ist. Das Rohrstück führt durch ein Loch der Montageplatte hindurch und ist an dieser mit zwei Muttern festgelegt.

Die DE-U-299 22 692 offenbart eine Steckverbindung mit einem Aufnahmeteil, da in einer ringförmigen inneren Ausnehmung einen Schnappring aufweist, in den ein Flansch eines anzuschliessenden Fittings einrastbar ist. Eine Klemmverbindung sichert den Fitting gegen ein Verdrehen bezüglich des Aufnahmeteils.

Die US 1,587,079 offenbart eine Schlauchkupplung mit einem Aufnahmeteil, das in einer ringförmigen Ausnehmung einen Klemmring mit nach innen gerichteten Klauen zur Fixierung eines Flansches aufweist.

Die GB-A.926,215 offenbart eine lösbare Leitungskupplung, die als Steckverbindung ausgebildet ist und einen Schieber aufweist, mit dem ein Ring radial nach aussen expandierbar ist.

Die US 6,027,144 offenbart eine Kupplung mit einer Verriegelung, die eine teilweise und eine vollständige

Verriegelung ermöglicht.

Die EP-A-1 235 023 offenbart eine Kupplung, die in einer Nut eines Aufnahmeteils einen expandierbaren Ring aufweist.

Die DE-U-298 05 720 offenbart eine Steckkupplung, die in einer Nut eines Aufnahmeteils einen expandierbaren Haltering aufweist.

Der Erfindung liegt die Aufgabe zugrunde, eine Leitungsdurchführung der genannten Art zu schaffen, die auch bei engen Platzverhältnissen einfacher montierbar ist.

Die Aufgabe ist bei einer gattungsgemässen Leitungsdurchführung gemäss Anspruch 1 gelöst. Bei der erfindungsgemässen Leitungsdurchführung wird der anzuschliessende Leitungsteil nicht wie bisher aufgeschraubt, sondern in den Anschlussfitting eingesteckt und dadurch eine Steckverbindung gebildet. Bei engen Platzverhältnissen, wie dies beispielsweise hinter einer Anschlussplatte eines Montagegestells regelmässig der Fall ist, kann ein Leitungsteil wesentlich einfacher eingesteckt als aufgeschraubt werden.

Nach einer Weiterbildung der Erfindung ist vorgesehen, dass eine um die Längsachse des Anschlussfittings drehbare Steckverbindung herstellbar ist. Der Leitungsteil kann dadurch auch nach der Montage beliebig gedreht und ausgerichtet werden. Dies ist insbesondere dann sehr vorteilhaft, wenn beispielsweise an einer Anschlussplatte mehrere Leitungsdurchführungen zu montieren sind. Die zuzuführenden Leitungen können dann optimal zueinander ausgerichtet bzw. angepasst werden.

Eine besonders sichere und einfach zu bedienende Steckverbindung ergibt sich dadurch, dass gemäss der Erfindung die Verbindungsmittel einen Haltering aufweisen, der in eine Ausnehmung des ersten Endes des Anschlussfittings eingesetzt ist und der zur Aufnahme eines Flansches eines Leitungsteils ausgebildet ist. Eine solche Steckverbindung besteht aus wenigen Teilen und ermöglicht eine Rastverbindung, bei der am Leitungsteil lediglich ein Aussenflansch erforderlich ist. Eine solche Steckverbindung kann lösbar oder unlösbar ausgebildet werden.

Nach der Erfindung ist vorgesehen, dass in die Mehrkant-Aussenkontur eine Nut eingearbeitet ist, in die eine Befestigungsplatte eindrehbar ist, wobei diese Befestigungsplatte einen Durchbruch aufweist, der korrespondierend zur Mehrkant-Aussenkontur ausgebildet ist. Zur axialen Fixierung des aufgesteckten Anschlussfittings wird die Befestigungsplatte aufgesetzt und durch Drehen in die genannte Nut eingeführt. Nach einer Befestigung dieser Befestigungsplatte an der Wand bzw. an einer Armaturenplatte ist der Anschlussfitting drehsicher und axial unverschiebbar fixiert. Damit ist eine Montage ohne Muttern und somit ohne Schraubvorgänge möglich. Die Montage ist besonders einfach und auch bei engen Platzverhältnissen einfach und schnell durchführbar.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Schnitt durch eine montierte erfindungsgemässe Leitungsdurchführung,
- Figur 2: eine Ansicht von zwei Leitungsdurchführungen, die an einem Montagegestelle installiert sind,
- Figur 3: eine Ansicht gemäss dem Pfeil III der Figur 1, wobei der Leitungsteil weggelassen ist und
- Figur 4: ein Schnitt entlang der Linie IV-IV der Figur 1.

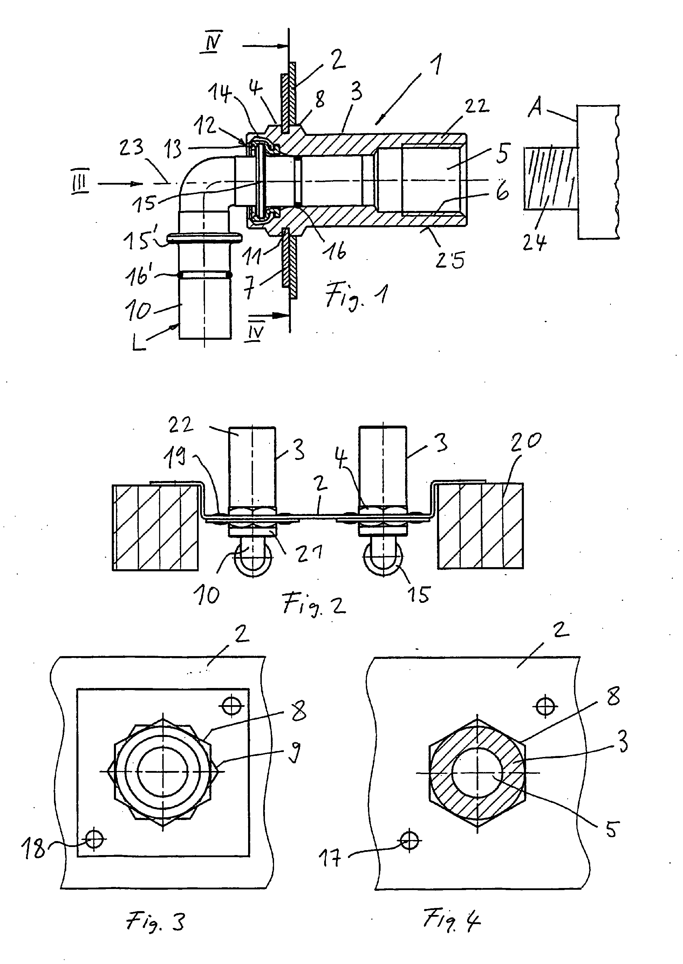

Die in Figur 1 gezeigte Leitungsdurchführung 1 weist einen Anschlussfitting 3 auf, der insbesondere ein Drehteil aus Messing ist und der an einem ersten Ende 21 mit einem Anschlussteil 10 einer Leitung L und an einem zweiten Ende 22 mit einer Sanitärarmatur A zu verbinden ist. Der Anschlussfitting 3 führt durch eine Wand 2 hindurch, die beispielsweise eine Anschlussplatte ist, welche gemäss Figur 2 an einem Sanitärgestell 20 befestigt ist. An der Wand 2 bzw. Anschlussplatte können auch zwei oder mehr als zwei solche Leitungsdurchführungen 1 installiert sein.

Der Anschlussfitting 3 besitzt an einer zylindrischen Aussenseite 23 eine Mehrkant-Aussenkontur 4, die insbesondere sechskantig ist und die in einen korrespondierenden Durchbruch 8 verdrehsicher eingesetzt ist. Die Mehrkant-Aussenkontur 4 ist so ausgebildet, dass sie wahlweise von der einen oder der anderen Seite in den Durchbruch 8 eingesetzt werden kann. Der Fitting 3 kann in Figur 1 somit wahlweise von links oder von rechts eingesetzt werden. In die Mehrkant-Aussenkontur 4 ist eine Nut 11 eingearbeitet, die zur Aufnahme einer Befestigungsplatte 7 vorgesehen ist, welche ebenfalls einen Durchbruch 9 aufweist, der korrespondierend zur Mehrkant-Aussenkontur 4 ausgebildet und somit insbesondere sechseckig ist. Ist der Anschlussfitting 3 in den Durchbruch 8 eingesetzt, so wird gemäss Figur 1 die Befestigungsplatte 7 von links auf die Mehrkant-Aussenkontur 4 aufgesetzt und um einen halben Mehrkant verdreht, sodass die Durchbrüche 8 und 9 gemäss Figur 3 angeordnet sind. Der Anschlussfitting 3 ist damit axial an der Halteplatte 7 fixiert. Die Wand 2 besitzt zwei diametral zum Durchbruch 8 angeordnete Befestigungslöcher 17, die bei aufgesetzter Halteplatte 7 mit Befestigungslöchern 18 der Halteplatte 7 in Deckung sind. Zur Befestigung der Halteplatte 7 an der Wand 2 werden durch die Löcher 17 und 18 Befestigungselemente 19, beispielsweise Befestigungsschrauben oder Nieten oder dergleichen angebracht. Der Anschlussfitting 3 ist damit fest mit der Platte 2 verbunden. Der Anschlussfitting 3 kann um seine Längsachse 23 nicht mehr gedreht und auch in Achsrichtung nicht mehr bewegt werden.

Für den Anschluss der Armatur A weist der Anschlussfitting 3 am zweiten Ende 22 ein Innengewinde 6 auf, in das die Armatur A mit einem Aussengewinde 24 eingeschraubt wird. Der Anschlussfitting 3 kann sehr kostengünstig aus einem mehrkantigen Stangenmaterial hergestellt werden. Aussengewinde sind nicht erforderlich.

Zur Befestigung des Leitungsteils 10, der gemäss Figur 1 insbesondere ein 90°-Winkelstück ist, ist am ersten Ende 21 eine Steckverbindung 12 vorgesehen. Diese weist in einer ringförmigen Ausnehmung 14 einen Ring 13 auf, der in diese Ausnehmung 14 eingesetzt ist. Der Ring 13 ist ein Spreizring, der beispielsweise aus Kunststoff hergestellt werden kann. Der Leitungsteil 10 besitzt zwei umlaufende Aussenflansche 15, von denen der eine in den Ring 13 eingerastet ist. Bei aufgesetztem Leitungsteil 10 umfasst der Ring 13 den entsprechenden Flansch 15 und fixiert diesen axial. Zur Gewährleistung der Dichtigkeit ist jeweils im Abstand zu einem Flansch 15 ein Dichtungsring 16 angeordnet, der gemäss Figur 1 in einem Durchgang 5 des Anschlussfittings 13 den Anschlussteil 10 gegenüber dem Anschlussfitting 3 abdichtet. Der in Figur 1 nicht für die Steckverbindung 2 benötigte Flansch 15' sowie der ebenfalls nicht verwendete Dichtungsring 16' können für eine Verbindung mit dem hier nicht gezeigten Leitungsrohr verwendet werden. Dieses Leitungsrohr kann auf den Leitungsteil 10 gemäss Figur 1 aufgesteckt werden. Denkbar ist auch eine Pressverbindung zwischen dem Leitungsteil 10 und dem Leitungsrohr.

Die Steckverbindung 12 ermöglicht ein Drehen des Leitungsteils 10 um die Achse 23. Der Leitungsteil 10 kann somit beliebig ausgerichtet und somit an das anzuschliessende Leitungsrohr angepasst werden.

Nachfolgend wird der Installations- bzw. Montagevorgang näher erläutert.

Auf den Anschlussfitting 3 wird die Halteplatte 7 wie oben erläutert aufgesetzt. In der Figur 1 wird nun der Anschlussfitting 3 mit der aufgesetzten Halteplatte 7 von links in den Durchbruch 8 eingesetzt, bis die Halteplatte 7 an der Rückseite der Wand anliegt. Mit den Befestigungselementen 19 wird der Fitting 3 an der Wand 2 befestigt. Nun wird der Leitungsteil 10 in der Figur 1 von links auf das erste Ende 21 aufgesetzt, bis der Flansch 15 in den Ring 13 eingerastet ist. Der Anschlussteil 10 wird nun um die Längsachse 23 gedreht, bis er die für den Anschluss einer hier nicht gezeigten Leitung exakt ausgerichtet ist. Diese Leitung wird nun auf den Leitungsteil 10 aufgesetzt und mit dem Flansch 15' befestigt sowie mit dem Dichtungsring 16'abgedichtet.

Grundsätzlich kann der Anschlussfitting 3 auch ohne Halteplatte 7 in den Durchbruch 8 eingesetzt werden. Die Halteplatte 7 wird dann nachträglich auf den Fitting 3 aufgesetzt und wie oben erwähnt gedreht.

Der Anschlussfitting 3 kann an der Wand 2 bzw. an der Anschlussplatte vormontiert sein und bildet dann eine Baueinheit, die am Installationsort lediglich noch am Sanitärgestell 20 befestigt werden muss. Eine solche Baueinheit kann gemäss Figur 2 zwei oder mehr als zwei Leitungsdurchführungen 1 aufweisen. Die genannte Baueinheit umfasst somit wenigstens eine Wand 2 bzw. Anschlussplatte, wenigstens einen Fitting 3, eine Halteplatte 7 sowie einen Haltering 13. Grundsätzlich kann diese Baueinheit zudem wenigstens einen Leitungsteil 10 aufweisen, der bereits gemäss Figur 1 in den Anschlussfitting 3 eingesetzt ist. Mit einer solchen vormontierten Baueinheit können die Arbeiten am Montageort wesentlich vereinfacht werden. Es muss dann lediglich noch die Anschlussplatte 2 am Montagegestell und das Leitungsrohr am Leitungsteil 10 befestigt werden.

### Bezugszeichenliste

- 1: Leitungsdurchführung
- 2: Anschlussplatte
- 3: Anschlussfitting
- 4: Mehrkant-Aussenkontur
- 5: Durchgang
- 6: Innengewinde
- 7: Befestigungsplatte
- 8: Durchbruch
- 9: Durchbruch
- 10: Leitungsteil
- 11: Nut
- 12: Steckverbindung
- 13: Ring
- 14: Ausnehmung
- 15: Flansch
- 16: Dichtungsring
- 17: Befestigungsloch
- 18: Befestigungsloch
- 19: Befestigungselement
- 20: Gestell
- 21: erstes Ende
- 22: zweites Ende
- 23: Längsachse
- 24: Aussengewinde
- 25: Aussenseite

## Patentansprüche

1. Leitungsdurchführung für die Installation von durch Wände (2) hindurchführenden Sanitärleitungen (L), mit einem Anschlussfitting (3) und mit einem an den Anschlussfitting (3) angeschlossenen Leitungsteil (10), welcher Anschlussfitting (3) erstes Ende (21) für den Anschluss der Leitung (10) und ein zweites Ende (22) mit einem Innengewinde (6) für den Anschluss einer Armatur (A), eine Mehr-Okant-Aussenkontur (4), eine Befestigungsplatte (7), sowie einen Durchgang (5) aufweist, wobei die Mehrkant-Aussenkontur zur Drehsicherung des Anschlussfittings (3) in einen korrespondierenden Durchbruch (8) einer Wand einsetzbar ist, und wobei diese Befestigungsplatte (7) einen Durchbruch (9) aufweist, der korrespondierend zur Mehrfach-Aussenkontur (4) ausgebildet ist, **dadurch gekennzeichnet, dass** der Anschlussfitting (3) am ersten Ende (21) Verbindungsmittel (13) zur Herstellung einer Steckverbindung (12) aufweist, wobei diese Verbindungsmittel (13) am ersten Ende (21) in einer ringförmigen Ausnehmung (14) des Durchgangs (5) angeordnet sind und einen Haltering (13) aufweisen, der in die ringförmige Ausnehmung (14) eingesetzt ist und der zur Aufnahme eines Flansches (15) des Leitungsteils (10) der genannten Leitung ausgebildet ist, wobei der Haltering (13) den Flansch (15) umfasst und axial fixiert, sowie in die Mehrkant-Aussenkontur (4) eine Nut (11) eingearbeitet ist, in die die Befestigungsplatte (7) eingedreht ist.

2. Leitungsdurchführung nach Anspruch 1, **dadurch gekennzeichnet, dass** die Steckverbindung (12) zwischen dem Leitungsteil (10) und dem Anschlussfitting (3) so ausgebildet ist, dass der Leitungsteil (10) um eine Längsachse (23) des Anschlussfittings (3) drehbar ist.

## Claims

1. Lead-through for the installation of sanitary lines (L) leading through walls (2), having a connection fitting (3) and having a line part (10) connected to the connection fitting (3), which connection fitting (3) has a first end (21), for the connection of the line (10), and a second end (22), with an internal thread (6), for the connection of an attachment (A), a polygonal outer contour (4), a fastening plate (7) and a through-passage (5), wherein the polygonal outer contour, for securing the connection fitting (3) against rotation, can be inserted into a corresponding aperture (8) in a wall, and wherein this fastening plate (7) has an aperture (9) which corresponds to the polygonal outer contour (4), **characterized in that** the connection fitting (3) has, at the first end (21), connecting means (13) for making a plug-in connection (12), wherein these connecting means (13) are arranged, at the first end (21), in an annular recess (14) of the through-passage (5) and have a retaining ring (13) which is inserted into the annular recess (14) and is designed for accommodating a flange (15) of the part (10) of the aforementioned line, and wherein the retaining ring (13) encloses the flange (15), and fixes the same axially, and the polygonal outer contour (4) has made in it a groove (11) into which the fastening plate (7) is screwed.

2. Lead-through according to Claim 1, **characterized in that** the plug-in connection (12) is formed between the line part (10) and the connection fitting (3) such that the line part (10) can be rotated about a longitudinal axis (23) of the connection fitting (3).

## Revendications

1. Traversée de conduite pour l'installation de conduites sanitaires (L) traversant des parois (2), comprenant un raccord (3) et une partie de conduite (10) raccordée au raccord (3), lequel raccord (3) présente une première extrémité (21) pour le raccordement de la conduite (10) et une deuxième extrémité (22) avec un filetage interne (6) pour le raccordement d'une armature (A), un contour extérieur polygonal (4), une plaque de fixation (7) ainsi qu'un passage (5), le contour extérieur polygonal pouvant être inséré pour la fixation non rotative du raccord (3) dans un orifice correspondant (8) d'une paroi, et cette plaque de fixation (7) présentant un orifice (9) qui est réalisé de manière correspondant au contour extérieur polygonal (4), **caractérisée en ce que** le raccord (3) présente, à la première extrémité (21), des moyens de connexion (13) pour créer une connexion par enfichage (12), ces moyens de connexion (13) étant disposés à la première extrémité (21) dans un évidement annulaire (14) du passage (5) et présentant une bague de fixation (13) qui est insérée dans l'évidement annulaire (14) et qui est réalisée pour recevoir une bride (15) de la partie de conduite (10) de ladite conduite, la bague de fixation (13) entourant la bride (15) et la fixant axialement, et une rainure (11) étant pratiquée dans le contour extérieur polygonal (4), dans laquelle est enfoncée par rotation la plaque de fixation (7).

2. Traversée de conduite selon la revendication 1, **caractérisée en ce que** la connexion par enfichage (12) entre la partie de conduite (10) et le raccord (3) est réalisée de telle sorte que la partie de conduite (10) puisse tourner autour d'un axe longitudinal (23) du raccord (3).
